## Europäisches Patentamt
## European Patent Office
## Office européen des brevets

(11) Numéro de publication: **0 117 792**
**B1**

(12)

# FASCICULE DE BREVET EUROPEEN

(45) Date de publication du fascicule du brevet:
**07.01.87**

(51) Int. Cl.⁴: **G 02 B 5/32**, H 04 N 5/72,
G 03 H 1/26, G 02 B 27/00

(21) Numéro de dépôt: **84400225.3**

(22) Date de dépôt: **02.02.84**

(54) **Dispositif de visualisation cathodique couleur équipé d'un élément holographique et procédé de fabrication de cet élément.**

(30) Priorité: **08.02.83 FR 8301961**

(43) Date de publication de la demande:
**05.09.84 Bulletin 84/36**

(45) Mention de la délivrance du brevet:
**07.01.87 Bulletin 87/2**

(84) Etats contractants désignés:
**DE GB SE**

(56) Documents cités:
**EP - A - 0 066 496**
**GB - A - 1 574 351**
**GB - A - 1 602 373**
**US - A - 3 737 212**

(73) Titulaire: **THOMSON-CSF, 173, Boulevard Haussmann,
F-75379 Paris Cedex 08 (FR)**

(72) Inventeur: **Reymond, Jean-Claude, THOMSON-CSF
SCPI 173, bld Haussmann, F-75379 Paris Cedex 08 (FR)**

(74) Mandataire: **Trocellier, Roger et al, THOMSON-CSF
SCPI 19, avenue de Messine, F-75008 Paris (FR)**

## Description

L'invention concerne des dispositifs de visualisation sur tube cathodique couleur ainsi qu'un procédé de fabrication d'un élément optique holographique équipant ces tubes pour augmenter la luminosité apparente de l'image. L'invention s'applique notamment avec avantage dans le domaine aéronautique.

Dans le matériel embarqué à bord des aérodynes, figurent souvent des tubes cathodiques couleur destinés à visualiser des renseignements nécessaires à la navigation. Ces tubes peuvent constituer à titre d'exemple, des indicateurs cartographiques présentant au pilote la carte géographique de la région survolée et des indications relatives à la position et au fonctionnement de l'aérodyne (altitude, longitude, cap, vitesse, consommation de carburant...). Toutefois, à haute altitude, l'éclairement ambiant peut être très intense et gêner la visualisation de l'image.

Le but de l'invention est d'augmenter la luminosité apparente de l'écran de manière à ce que l'image reste perceptible pour le pilote dans ses moindres détails.

Un objet de l'invention est de réaliser un élément qui augmente la luminosité apparente de l'image émise sur l'écran d'un tube cathodique couleur à masque perforé.

D'une part, on cannaît par le document EP-A-66 469 du 08/12/1982, un filtre optique à microvolets dont une utilisation consiste à appliquer ce filtre devant l'écran d'un tube cathodique. Le filtre est obtenu en formant des microvolets dans une couche photosensible déposée sur une face latérale d'une plaque support constituée par une feuille de plastique ou une lame de verre. Ces microvolets sont constitués par des strates résultant d'un enregistrement holographique dans cette couche d'une source lumineuse ponctuelle en procédant par holographie épaisse par transmission. Ce filtre est utilisé pour la visualisation, sous forte ambiance lumineuse, dans un champ d'observation délimité, mais ne permet pas d'augmenter la luminosité apparente de l'image visualisée sur l'écran du tube.

D'autre part, on sait réaliser des éléments holographiques dont les hologrammes ont des propriétés de restitution qui s'apparentent à celles d'éléments optiques classiques.

L'objet de l'invention est plus précisément de réaliser un élément optique holographique pour augmenter la luminosité apparente de l'écran d'un tube cathodique couleur, cet élément étant adapté à la répartition des éléments luminophores de l'écran.

Suivant l'invention, on propose un dispositif de visualisation comportant un tube cathodique couleur avec un écran constitué d'éléments luminophores derrière un masque, et une plaque transparente portant un hologramme disposée à l'extérieur du tube et à proximité de l'écran pour limiter le champ d'observation de l'image visualisée par l'écran, caractérisé en ce que l'hologramme de ladite plaque constitue un élément optique holographique jouant le rôle de lentilles convergentes dont la répartition est identique à celle des éléments luminophores, chaque lentille étant associée à un élément luminophore situé dans son plan focal et ayant une surface supérieure à celle de l'élément luminophore en sorte d'accroître pour l'observation la luminosité apparente de l'écran.

Les particularités et avantages de l'invention seront mieux compris à la lecture de la description qui suit, donnée à titre d'exemple et illustrée des figures qui représentent:

— figure 1, un dispositif de visualisation cathodique couleur conforme à l'invention;

— figure 2, un schéma relatif à la structure fonctionnelle de l'élément optique holographique utilisé par rapport aux éléments luminophores;

— figure 3, un schéma de principe montrant l'accroissement de luminosité obtenu au niveau d'un élément luminophore;

— figure 4, un schéma d'un procédé de réalisation dé l'élément optique holographique selon la figure 2;

— figure 5; un schéma partiel d'un procédé de réalisation d'un élément optique holographique selon une variante de l'invention.

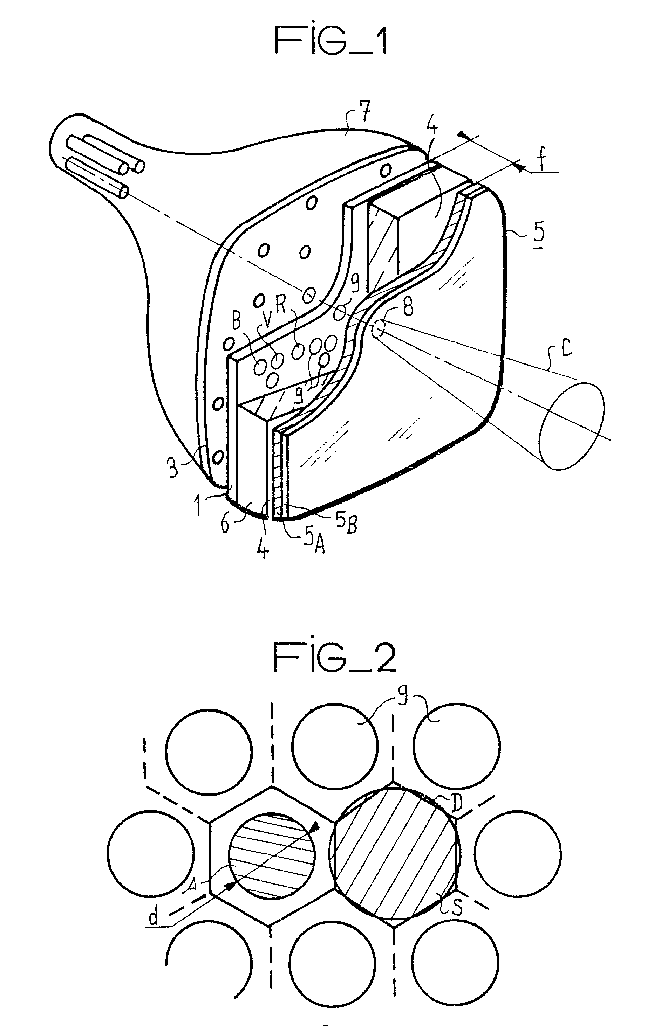

Parmi les tubes cathodiques couleur, le tube à masque perforé encore appelé tube à masque d'ombre (traduction de shadow mask) est le plus répandu et équipe la plupart des téléviseurs en service. L'invention s'applique plus particulièrement à ce type de tube dont le fonctionnement est bien connu. Le lecteur pourra se reporter par exemple au traité de télévision en couleur intitulé «Nouveau guide de la télévision en couleur» édition 1980 CHIRON, en particulier tome 1, chapitre 2. On rappelle simplement, comme représenté sur la figure 1, que l'écran trichrome 1 est composé d'un grand nombre de triades d'éléments luminophores 9 et qu'il est placé devant le masque perforé 3. Chaque triade comprend trois éléments luminophores circulaires 9 dont les centres correspondent au sommet d'un triangle équilatéral. Sur une même ligne horizontale se trouvent alignés successivement un élément luminophore bleu, un vert et un rouge, et ainsi de suite, repérés respectivement B, V, R, sur la figure 1. Sur la ligne suivante, les éléments luminophores 9 sont décalés de manière à être disposés en quinconce par rapport à la ligne précédente.

L'élément optique holographique 5 constitué d'une plaque ou d'une feuille transparente 5B portant l'hologramme 5A est appliqué à proximité de l'écran 1 dont il est séparé au moins par l'épaisseur du verre 6 de la face avant du tube cathodique 7. La structure fonctionnelle de l'élément optique 5 joue le rôle d'une pluralité de lentilles convergentes dont une 8 est représentée associée à un élément luminophore 9 de l'écran 1. L'élément holographique 5 est enregistré et positionné de façon à faire correspondre à chaque élément luminophore 9 une lentille convergente 8. Ainsi, chaque lentille 8 permet de concentrer l'énergie lumineuse de l'élément luminophore 9 associé dans un angle solide délimité et symbolisé par le cône C. L'énergie émise par l'ensemble des éléments luminophores 9 se trouve ainsi concentrée dans un champ d'observation délimité. La distance f séparant les éléments luminophores 9 de l'écran 1 de la surface externe de l'élément holographique 5 est choisie en sorte d'égaler l'épaisseur du verre 6. L'élément optique holographique 5 est placé en sorte que l'hologramme 5A est entre la feuille support 5B et la face externe 4 du tube 7.

La figure 2 représente une répartition partielle des éléments luminophores 9 de l'écran d'un tube à masque perforé, ceux-ci n'étant pas jointifs. On peut attribuer à chacun d'eux une surface héxagonale S, supérieure à la surface s de chaque élément luminophore 9, pour occuper la surface totale de l'écran.

L'hologramme permet de faire correspondre à chaque élément luminophore 9, une lentille convergente de diamètre D placée de sorte que l'élément luminophore 9 soit dans le plan focal de la lentille, chaque hexagone étant assimilé à une lentille circulaire de diamètre D et de surface S.

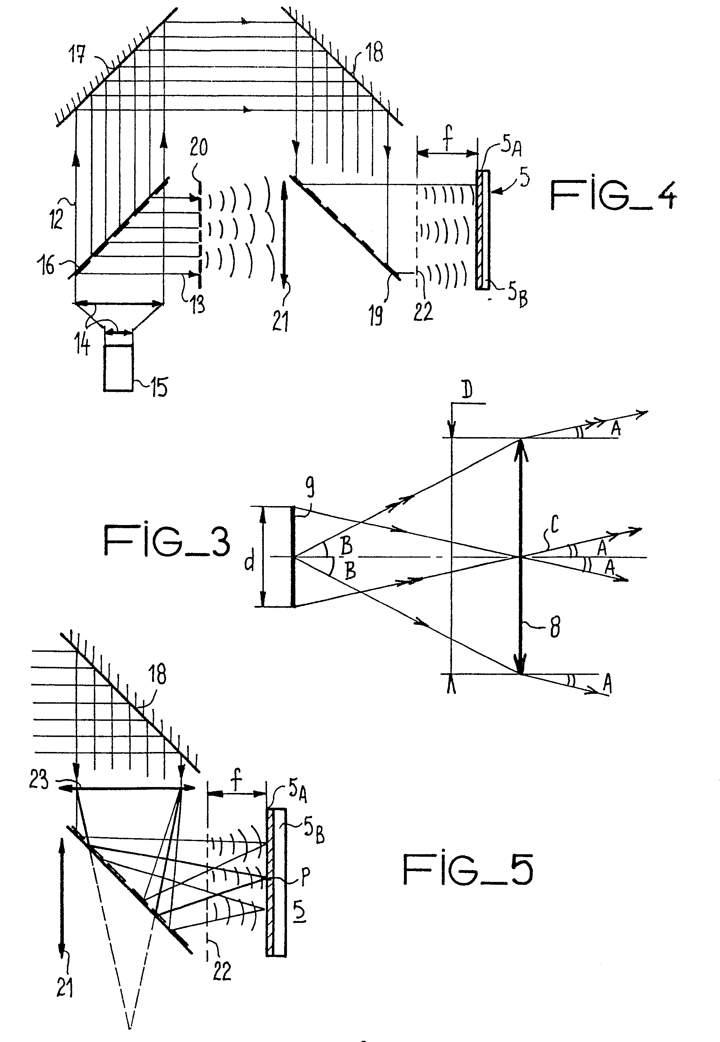

Sur la figure 3 l'angle A est le demi angle au sommet du cône centré sur l'axe optique de la lentille 8, et l'angle B le demi angle au sommet sous lequel on voit la lentille 8 de diamètre D du centre de l'élément luminophore 9 de diamètre d. Les deux angles A et B sont liés par la relation d'ABBE:

$$\text{sinus A} = \frac{d}{D} \cdot \text{sinus B}.$$

En ce qui concerne cette formule, le lecteur pourra se reporter notamment à l'ouvrage de A. MARECHAL: Traité d'optique Instrumentale, Tome 1, Imagerie Géométrique, Aberrations, Edition de la Revue d'Optique, pages 21-22 de l'édition 1952.

Si on appelle U la luminance d'un élément luminophore 9, un observateur placé dans le cône C de demi angle au sommet A percevra l'élément luminophore avec une luminance égale à $U \times \frac{D^2}{d^2}$. La possibilité d'utiliser des lentilles de diamètre supérieur à D se chevauchant entre elles, pour accroître la luminance perçue, est expliquée dans ce qui suit. Par un enregistrement holographique, on réalise un élément jouant le rôle d'une telle structure théorique de lentilles optiques 8, afin d'appliquer le principe rappelé précédemment, étant donné que ces lentilles 8 ont une surface théorique S supérieure à celle s des éléments luminophores 9.

En référence à la figure 4, un procédé de réalisation de l'élément optique 5 par enregistrement holographique est le suivant. L'élément optique 5 a pour structure une feuille ou une plaque support 5B portant une couche de matériau photosensible 5A tel que de la gélatine bichromatée et dont l'épaisseur peut être de l'ordre de 5 µm, c'est-à-dire plusieurs fois chacune des différentes longueurs d'ondes utilisées pour l'enregistrement, ces longueurs d'ondes étant celles des trois composantes conventionelles issues des éléments luminophores de l'écran du tube à équiper. On enregistre d'abord les lentilles relatives à une première composante en utilisant une source lumineuse 15, telle un laser de même longueur d'onde que la composante choisie. Un miroir partiellement transparent 16 sépare en deux voies ondes 12, 13 le faisceau d'ondes planes issu de la source 15 et élargi par un dispositif optique 14. On place sur le trajet de la deuxième voie d'ondes 13 un masque 20 qui diffracte celle-ci. L'optique 21 reforme l'image réelle 22 du masque 20 devant et parallèlement à l'élément optique 5 à une distance f de la couche photosensible 5A. La première voie d'ondes 12, appelée voie d'ondes de référence, est ramenée au niveau de l'image réelle 22 au moyen de déviateurs tels que des miroirs réfléchissants 17 et 18, et un miroir partiellement transparent 19 placé entre l'optique 21 et l'image réelle 22. La couche photosensible 5A enregistre les interférences, provoquées par la rencontre des deux voies d'ondes 12 et 13, qui constituent l'hologramme du masque perforé 20. On sait procéder différemment pour obtenir un hologramme de l'objet 20 constituant un ensemble de lentilles convergentes, la réalisation décrite ici est en aucun cas limitative.

Sans détailler la théorie de l'enregistrement et de la restitution holographique on signale que:

— Le type d'enregistrement décrit est un enregistrement de phase. L'épaisseur de la couche photosensible 5A, environ 5 µm, étant supérieure à la longueur d'onde des deux voies d'ondes lumineuses, 0,4 à 0,8 µm, l'enregistrement s'effectue en milieu épais et le rendement avoisine donc 100%.

— L'hologramme d'un point enregistré de la manière décrite précédemment, éclairé par la même source de lumière que celle utilisée pour son enregistrement, concentre ou diffuse le faisceau qui l'éclaire de façon identique à une lentille optique. L'hologramme d'un ensemble de perforations de 300 µm de diamètre, donc assimilable à des points, semblable à celui d'un masque perforé d'un tube couleur, se comporte, lorsqu'il est éclairé, comme un ensemble de lentilles optiques. L'hologramme du masque perforé 20 constitue donc lorsqu'il est éclairé par une source d'ondes sphériques, un ensemble de lentilles convergentes positionnées par rapport au trou du masque 20 de façon déterminée.

— La distance séparant la couche photosensible 5A de l'élément optique 5 et l'image réelle 21 du masque 20 détermine la distance focale des lentilles qui sera égale à cette distance f. Celle-ci peut alors être choisie en fonction des conditions d'éloignement de l'hologramme de l'élément optique 5 par rapport à l'écran 1 du tube 7 (figure 1).

On a choisi, pour l'enregistrement un laser de longueur d'onde égale à celle de la première composante chromatique générée par les éléments luminophores de l'écran du tube 7, et on obtient des lentilles qui ne modifieront optiquement avec une certaine incidence que les ondes de longueur d'onde égale à celle de la composante choisie. L'opération est répétée ensuite deux fois pour enregistrer les lentilles relatives aux deux autres composantes chromatiques. Pour cela on remplace le laser qui a servi à l'enregistrement des lentilles relatives à la première composante par un laser de longueur égale à celle de la deuxième composante et positionné à la place du premier. On décale, dans une direction parallèle à l'alignement des éléments luminophores de l'écran qui est équipé de cet élément optique 21, le support d'enregistrement holographique de l'élément optique 21, ou le masque 20, d'une quantité égale au pas des éléments luminophores de l'écran. On procède alors à l'enregistrement des lentilles relatives à la deuxième composante chromatique. On recommence l'opération précédente après avoir effectué un décalage identique dans la même direction qu'auparavant pour former les lentilles relatives à la troisième composante chromatique avec un laser de longueur d'onde égale à celle de cette troisième composante chromatique.

Le procédé de réalisation illustré par la figure 5 utilise le même matériel mis en œuvre que pour le procédé précédemment décrit figure 4. Seule une optique convergente 23 à été placée sur le trajet de la voie d'ondes de référence 12, perpendiculairement à celle-ci. Les radiations de cette onde convergent en des points situés dans le plan de la couche photosensible 5A car l'optique 23 a une distance focale égale à la distance qui la sépare de la couche photosensible 5A, en suivant le trajet des radiations de la voie d'ondes de référence 12 se réfléchissant sur le miroir partiellement transparent 22. Les rayons extrêmes sont représentés comme provenant de la voie d'ondes de référence 12, ceci pour trois points différents de la couche photosensible 5A, en particulier pour le point central P dont on a imaginé les rayons extrêmes en traits mixtes traversant le miroir partiellement transparent 22. L'hologramme enregistré selon ce second procédé a des propriétés optiques identiques à un ensemble de lentilles convergentes, dont les axes convergent en un point situé sur l'axe du tube cathodique. L'image alors émise sur l'écran du tube paraît encore plus intense pour un observateur dont les yeux se trouvent sur cet axe à la distance focale de l'élément optique holographique.

Pour accroître l'intensité lumineuse restituée par les lentilles de l'élément optique ainsi enregistré, on a envisagé précédemment d'augmenter le diamètre théorique des lentilles, donc la surface théorique. En effet, en se reportant à la figure 3, les zones d'enregistrement correspondant aux lentilles peuvent se chevaucher, mais comme les lentilles contiguës sont relatives à des longueurs d'ondes différentes, les chevauchements sont sans effets les uns par rapport aux autres. Un plaque holographique pouvant porter plusieurs hologrammes superposés, on procède à l'enregistrement de lentilles de diamètre théorique supérieur au pas séparant les éléments luminophores contigus.

Une conséquence de l'utilisation de lentilles optiques holographiques s'avère avantageuse par le fait qu'elles possèdent des aberrations chromatiques non négligeables: l'image émise par un luminophore n'est pas transmise de façon très nette. L'observateur se trouvant à une courte distance de l'écran distingue habituellement l'image de l'écran sous un aspect granulaire. Dans le cas de l'utilisation de l'élément holographique, une fusion des couleurs se produit dans les espaces séparant les luminophores et l'aspect granulaire de l'écran s'estompe.

L'invention peut s'appliquer à des tubes cathodiques couleur différents de ceux utilisant un masque perforé à trous circulaires tels que les tubes cathodiques du type PIL («Precision In Line»). L'élément optique holographique étant l'hologramme de fentes minces du masque, au lieu de perforations rondes, et constituant un élément optique convergent pour les éléments luminophores de forme longitudinale. Le rapport des surfaces théoriques des lentilles optiques holographiques longitudinales sur la surface des éléments luminophores longitudinaux de l'écran d'un tel tube cathodique étant moins important que dans le cas précédent, l'efficacité de l'élément optique est moins appréciable. Le procédé de réalisation d'un tel élément optique holographique est identique à celui précédemment décrit, l'objet utilisé pour l'enregistrement étant alors semblable au masque comportant des fentes et utilisé dans ce type de tube.

## Revendications

1. Dispositif de visualisation cathodique comportant un tube cathodique couleur avec un écran constitué d'éléments luminophores derrière un masque, et une plaque transparente portant un hologramme disposée à l'extérieur du tube et à proximité de l'écran pour limiter le champ d'observation de l'image visualisée par l'écran, caractérisé en ce que l'hologramme de ladite plaque (5) constitue un élément optique holographique (5A) jouant le rôle de lentilles convergentes dont la répartition est identique à celle des éléments luminophores (9), chaque lentille (8) étant associée à un élément luminophore, situé dans son plan focal, et ayant une surface supérieure à celle de l'élément luminophore en sorte d'accroître pour l'observation la luminosité apparente de l'écran (1).

2. Dispositif de visualisation selon la revendication 1, caractérisé en ce que l'hologramme est tel que chaque lentille (8) ne transmet que les radiations de longueur d'onde égale à celle émise par l'élément luminophore (9) associé.

3. Dispositif de visualisation selon la revendication 1 ou 2, caractérisé en ce que l'hologramme est réalisé de manière à ce que les axes desdites lentilles (8) convergent vers un point prédéterminé situé de préférence sur l'axe du tube cathodique (7).

4. Dispositif de visualisation selon la revendication 1 ou 2, caractérisé en ce que l'hologramme est réalisé de manière à ce que les axes desdites lentilles (8) sont parallèles à l'axe du tube cathodique (7).

5. Appareil de visualisation cathodique selon l'une quelconque des revendications précédentes, caractérisé en ce que le tube est du type à masque perforé et qu'un objet identique au masque perforé dudit tube est utilisé pour l'enregistrement de l'hologramme.

6. Procédé de réalisation d'un élément optique holographique utilisé dans un dispositif selon l'une quelconque des revendications précédentes, caractérisé par les opérations suivantes:

— élaboration de deux voies d'ondes planes (12, 13) de même longueur d'ondes déterminée;

— transformation de la deuxième voie d'ondes planes (13) en ondes sphériques en plaçant sur son trajet un masque (20) identique à celui du tube cathodique à équiper;

— formation de l'image réelle (22) dudit masque (20) sur le trajet de la première voie d'onde dite de référence (12) d'ondes planes, pour créer des interférences dans une couche photosensible (5A) à impressionner portée par ladite plaque (5B) et placée à sa distance d'utilisation par rapport à l'écran (1);

— élaboration d'un deuxième enregistrement en utilisant une deuxième longueur d'onde après avoir déplacé la plaque (5B) ou ledit masque (20) d'un pas égale à celui séparant lesdits éléments luminophores (9) de l'écran (1) dans une direction déterminée;

— élaboration d'un troisième enregistrement en utilisant une troisième longueur d'onde après avoir déplacé la plaque (5B) ou ledit masque (20) d'un même pas et dans la même direction que précédemment, lesdites trois longueurs d'onde successivement utilisés étant celles des trois composants chromatiques du tube cathodique.

7. Procédé de réalisation selon la revendication 6, caractérisé en ce qu'une optique convergente (23) est interposée sur le trajet de la première voie d'onde (12) et positionnée telle que la distance la séparant de la couche photosensible (5A) en suivant le trajet parcouru par la première voie d'onde (12) correspond à sa distance focale.

8. Utilisation d'un dispositif de visualisation selon l'une quelconque des revendications 1 à 5 pour équiper un appareil indicateur de navigation aérienne.

## Patentansprüche

1. Kathodenstrahlanzeigevorrichtung mit einer Kathodenstrahl-Farbbildröhre, deren Bildschirm aus Leuchtelementen hinter einer Maske besteht, und mit einer ein Hologramm tragenden transparenten Platte, die sich ausserhalb der Röhre und in der Nähe des Bildschirms befindet, um das Betrachtungsfeld des auf dem Bildschirm sichtbaren Bildes zu begrenzen, dadurch gekennzeichnet, dass das Hologramm der Platte (5) ein holographisches optisches Element (5A) bildet, das die Funktion von Sammellinsen hat, deren Verteilung gleich der der Leuchtelemente (9) ist, wobei jede Linse einem Leuchtelement zugeordnet ist, das sich in deren Brennebene befindet, und eine grössere Oberfläche als das Leuchtelement besitzt, so dass die offenbare Leuchtkraft des Bildschirms (1) für die Betrachtung erhöht wird.

2. Anzeigevorrichtung nach Anspruch 1, dadurch gekennzeichnet, dass das Hologramm so ausgebildet ist, dass jede Linse (8) nur die Strahlungen einer Wellenlänge überträgt, die gleich der vom zugeordneten Leuchtelement (9) ausgesandten Wellenlänge ist.

3. Anzeigevorrichtung nach Anspruch 1 oder 2, dadurch gekennzeichnet, dass das Hologramm so ausgebildet ist, dass die Achsen der Linsen in einem vorgegebenen Punkt konvergieren, der sich vorzugsweise auf der Achse der Kathodenstrahlröhre (7) befindet.

4. Anzeigevorrichtung nach Anspruch 1 oder 2, dadurch gekennzeichnet, dass das Hologramm so ausgebildet ist, dass die Achsen der Linsen (8) zur Achse der Kathodenstrahlröhre (7) parallel verlaufen.

5. Kathodenstrahl-Anzeigegerät nach einem beliebigen der vorhergehenden Ansprüche, dadurch gekennzeichnet, dass die Röhre eine perforierte Maske besitzt und dass ein zur perforierten Maske der Röhre identisches Objekt für die Herstellung des Hologramms verwendet wird.

6. Verfahren zur Herstellung eines holographischen optischen Elements, das in einer Vorrichtung nach einem beliebigen der vorhergehenden Ansprüche verwendet wird, gekennzeichnet durch folgende Verfahrensschritte:

— Erzeugung von zwei Kanälen ebener Wellen (12, 13) einer gleichen vorgegebenen Wellenlänge ;

— Transformation des zweiten ebenen Wellenkanals (13) in sphärische Wellen, indem auf seinem Weg eine Maske (20) angeordnet wird, die der der so auszurüstenden Kathodenstrahlröhre entspricht;

— Bildung des reellen Bilds (22) dieser Maske (20) auf dem Weg des ersten Wellenkanals, Bezugskanal ebener Wellen (12) genannt, um Interferenzen in einer zu beschriftenden lichtempfindlichen Schicht (5A) zu erzeugen, die auf der Platte (5B) sitzt und zum Bildschirm (1) ihren Verwendungsabstand aufweist;

— Erzeugung einer zweiten Beschriftung unter Verwendung einer zweiten Wellenlänge nach einer Verschiebung der Platte (5B) oder der Maske (20) um einen Schritt, der dem Abstand zwischen den Leuchtelementen (9) des Bildschirms (1) in einer vorgegebenen Richtung entspricht;

— Bildung einer dritten Beschriftung unter Verwendung einer dritten Wellenlänge nach der Verschiebung der Platte (5B) oder der Maske (20) um denselben Betrag und in derselben Richtung wie vorher, wobei die drei nacheinander verwendeten Wellenlängen diejenigen der drei Farbkomponenten der Kathodenstrahlröhre sind.

7. Herstellungsverfahren nach Anspruch 6, dadurch gekennzeichnet, dass eine Konvergenzoptik (23) in den Weg des ersten Wellenkanals (12) eingefügt ist und so angeordnet ist, dass ihr Abstand zur lichtempfindlichen Schicht (5A) entlang des von dem ersten Wellenkanal durchlaufenden Wegs (12) ihrer Brennweite entspricht.

8. Verwendung einer Anzeigevorrichtung nach einem beliebigen der Ansprüche 1 bis 5 zur Ausrüstung eines Anzeigegerätes in der Flugnavigation.

## Claims

1. A cathode ray visualisation device comprising a colour cathode ray tube, the screen of which is constituted of luminophor elements behind a mask, and comprising a transparent plate bearing a hologram and disposed outside the tube and close to the screen in order to limit the observation field of the image visualized by the screen, characterized in that the hologramm of said plate (5) constitutes a holographic optical element (5A) acting as a set of converging lenses, the distribution of lenses being identical to that of the luminophor elements (9), each lens (8) being associated to a luminophor element situated in its focal plane, and the surface of each lens being larger than that of the luminophor element such that the effective luminosity of the screen (1) is increased for the observator.

2. A visualisation device according to claim 1, characterized in that the hologram is such that each lens (8) only transmits the radiations of a wavelength which is equal to that emitted by the associated luminophor element (9).

3. A visualisation device according to claim 1 or 2, characterized in that the hologram is made in such a way that the axes of said lenses (8) converge towards a predetermined point, preferably situated on the axis of the cathode ray tube (7).

4. A visualisation device according to claim 1 or 2, characterized in that the hologram is made in such a way that the axes of said lenses (8) are parallel to the axis of the cathode ray tube (7).

5. A cathode ray visualisation apparatus according to any one of the preceding claims, characterized in that the tube is of the perforated mask type, and that an object which is identical to the perforated mask of said tube is used for the recording of the hologram.

6. A method for realizing a holographic optic element used in a device according to any one of the preceding claims, characterized by the following operations:

— elaboration of two channels of plane waves (12, 13) having identical predetermined wavelengths;

— transformation of the second channel of plane waves (13) into spherical waves by placing on the path a mask (20) which is identical to that of the cathode ray tube which is to be equipped;

—. building the real image (22) of said mask (20) on the path of the first wave channel of plane waves, called reference channel (12) in order to create interferences in a photosensitive layer (5A) to be inscribed, said layer being borne by said plate (5B) and placed at its distance of operation with respect to the screen (1);

— elaboration of a second recording by using a second wavelength after having shifted the plate (5B) or the mask (20) for a step which is equal to that between the luminophor elements (9) of the screen (1) in a given direction;

— elaboration of a third recording by using a third wavelength after having shifted the plate (5B) or the mask (20) by the same step and along the same direction as in the preceding case, that three wavelengths which have been employed successively being the wavelengths of the three colour components of the cathode ray tube.

7. A realisation method according to claim 6, characterized in that a convergent optical unit (23) is interposed in the path of the first wave channel (12) and positioned in such a way that the distance between this unit and the photosensitive layer (5A) along the path of the first wave channel (12) corresponds to its focal distance.

8. The use of a visualisation device according to any one of claims 1 to 5 in the equipment of an airplane navigation indicator device.

# FIG_1

# FIG_2

FIG_4

FIG_3

FIG_5